(19) Europäisches Patentamt
European Patent Office
Office européen des brevets

(11) EP 1 674 516 B1

(12) # EUROPÄISCHE PATENTSCHRIFT

(45) Veröffentlichungstag und Bekanntmachung des Hinweises auf die Patenterteilung:
**11.06.2008 Patentblatt 2008/24**

(51) Int Cl.:
***C08K 5/521*** *(2006.01)* ***C08K 5/098*** *(2006.01)*

(21) Anmeldenummer: **05025660.1**

(22) Anmeldetag: **24.11.2005**

(54) **Schwerbrennbare Siliconkautschukszusammensetzung**

Fire-resistant silicon rubber compositon

Composition de caoutchouc siliconé résistante au feu

(84) Benannte Vertragsstaaten:
**BE DE FR GB NL PL**

(30) Priorität: **23.12.2004 DE 102004062351**

(43) Veröffentlichungstag der Anmeldung:
**28.06.2006 Patentblatt 2006/26**

(73) Patentinhaber: **Wacker Chemie AG**
**81737 München (DE)**

(72) Erfinder:
- **Jerschow, Peter, Dr.**
**84489 Burghausen (DE)**
- **Gerhardinger, Peter**
**84489 Burghausen (DE)**

(74) Vertreter: **Gössmann, Christoph Tassilo et al**
**Wacker-Chemie GmbH,**
**Zentralbereich PML,**
**Hanns-Seidel-Platz 4**
**81737 München (DE)**

(56) Entgegenhaltungen:
**US-A- 4 405 425**
**US-A- 4 701 488**
**US-A- 4 803 244**
**US-A- 6 069 201**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 674 516 B1

Printed by Jouve, 75001 PARIS (FR)

**Beschreibung**

Die Erfindung betrifft Zusammensetzungen von schwerbrennbaren Siliconkautschukmassen und damit isolierte Kabel und Profile.

Schwerbrennbare Zusammensetzungen sind aus DE 38 31 478 bekannt, in der eine Zusammensetzung beschrieben wird, die Polysiloxan, ein Metalloxid, wie Ceroxid, Zirkoniumoxid Titanoxid, eine Platinverbindung sowie eine Organosiliciumverbindung mit über Kohlenstoff an Silicium gebundenen basischen Stickstoff enthält. Diese Zusammensetzung ist jedoch sehr geruchsintensiv und bei der Eigenschaft der Schwerbrennbarkeit unbefriedigend.

Aufgabe der Erfindung ist es, den Stand der Technik zu verbessern und insbesondere Siliconkautschuk als Kabelisoliermaterial zur Verfügung zu stellen, der die Nachteile des Standes der Technik überwindet und insbesondere ein Material als Kabelisolierung zur Verfügung zu stellen, das schwerbrennbar ist und den Funktionserhalt im Brandfall bei geringer Dichte ermöglicht.

Diese Aufgabe wird durch die Erfindung gelöst.

Gegenstand der Erfindung ist eine schwerbrennbare Zusammensetzung enthaltend peroxidisch vernetzenden, additionsvernetzenden oder kondensationsvernetzenden Siliconkautschuk und zumindest eine Rhodiumverbindung oder Iridiumverbindung oder Mischungen beider.

Der erfindungsgemäße Siliconkautschuk ist eine peroxidisch vernetzende Organopolysiloxanmasse, die folgende Komponenten enthält.

Organopolysiloxane aus Einheiten der allgemeinen Formel

$$R_rSiO_{\frac{4-r}{2}} \qquad (I),$$

worin R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphthyl- und Anthryl-und Phenanthrylrest; Alkarylreste, wie o-, m-, p-Tolylreste, Xylylreste und Ethylphenylreste; Aralkylreste, wie der Benzylrest, der $\alpha$- und der ß-Phenylethylrest,
wobei R gleich oder verschieden sein kann und gegebenenfalls substituierter Kohlenwasserstoffrest bedeutet.
r 0, 1, 2 oder 3 ist und einen durchschnittlichen Zahlenwert von 1,9 bis 2,1 hat.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Organopolysiloxan (A) aus Einheiten der Formel (I) enthaltenen Si-Atome Alkylreste, insbesondere Methylreste, gebunden. Enthalten die Organopolysiloxane neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Vorzugsweise bestehen die Organopolysiloxane (A) überwiegend aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen $10^3$ und $10^8$ $mm^2/s$ auf.

Vorzugsweise werden als Vernetzer bei den erfindungsgemäßen Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis-(4-Methylbenzoyl)peroxid (= PMBP) und 2,5-Dimethyl-Hexan-2,5-di-tertiär-butylperoxid (=DHBP) im Verhältnis 1 : 0,4 bis 0,5 : 1, bevorzugt im Verhältnis 1:0,4, verwendet.

Des weiteren enthalten die erfindungsgemäßen Organopolysiloxane (A) vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 $m^2/g$.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststofffasern, eingesetzt werden. Die BET-Oberfläche dieser Füllstoffe liegt vorzugsweise unter 50 $m^2/g$.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Organopolysiloxan (A).

Der jeweiligen Anwendung entsprechend können den erfindungsgemäßen zu Elastomeren vulkanisierbaren Organopolysiloxanmassen Additive (C), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (C) eingesetzt werden können, sind mit Trimethylsilylgruppen oder Hydroxygruppen terminierte Polydimethylsiloxane mit einer Viskosität von maximal 1000 $mm^2/s$ bei 25°C oder auch Diphenylsilandiol.

Beispiele für Hitzestabilisatoren, die als Additive (C) eingesetzt werden können, sind Übergangsmetallfettsäuresalze, wie Eisenoctoat, Übergangsmetallsilanolate, wie Eisensilanolat, sowie Cer(IV)-Verbindungen.

Darüber hinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Des weiteren können als Silikonkautschukmassen auch übliche kondensationsvernetzende Organopolysiloxane, wie in z. B EP 0 359 251 beschrieben, oder auch bekannte additionsvernetzende RTV-Massen oder HTV-Massen, wie in EP 0355459 B1 beschrieben, verwendet werden.

Beispiel der Herstellung eines additionsvernetzten HTV - Silikonkautschuks:

75 Teile eines durch Trimethylsiloxygruppen endblockierten Diorganopolysiloxans aus 99,7 Mol - % Dimethylsiloxaneinheiten und 0,3 Mol - % Vinylmethylsiloxaneinheiten mit einer Viskosität von 8 x $10^6$ mPa.s bei 25°C sowie 25 Teile eines durch Trimethylsiloxygruppen endblockierten Diorganopolysiloxans aus 99,4 Mol - % Dimethylsiloxaneinheiten und 0,6 Mol - % Vinylmethylsiloxaneinheiten mit einer Viskosität von 8 x $10^6$ mPa.s bei 25°C werden in einem bei 150°C betriebenen Kneter mit 45 Teilen pyrogen in der Gasphase erzeugten Siliciumdioxid mit einer BET - Oberfläche von 300 $m^2/g$ und 7 Teilen eines in den endständigen Einheiten je eine Si-gebundene Hydroxylgruppe aufweisenden Dimethylpolysiloxans mit einer Viskosität von 40 mPa.s bei 25°C vermischt und zwei Stunden lang geknetet.

Bei den Rhodiumverbindungen handelt es sich vorzugsweise um $[Rh(O_2CCH_3)_2]_2$, $Rh(O_2CCH_3)_3$, $Rh_2(C_8H_{15}O_2)_4$, $Rh(C_5H_7O_2)_3$, $Rh(C_5H_7O_2)(CO)_2$, $Rh(CO)[Ph_3P](C_5H_7O_2)$, $Rh(CO)_2(C_5H_7O_2)$, $RhCl_3[(R)_2S]_3$, $(R^2{}_3P)_2Rh(CO)X$, $(R^2{}_3P)_3Rh(CO)H$ und $Rh_2X_2Y_4$, Rhodiumverbindung, wobei zumindest eine aus der Gruppe ausgewählt wird, die aus Verbindungen der Formel

$$[(R^2\text{-C (=O) -O-})_2Rh]_2 \qquad (III),$$

$$L(X)\,Rh\,(PR^3{}_3)_s \qquad (IV)$$

oder

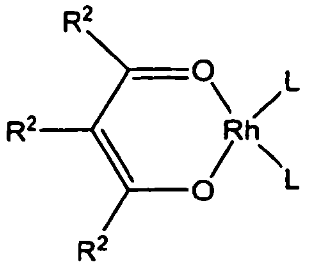

(V)

besteht,
wobei

**$R^2$** gleich oder verschieden sein kann und Wasserstoffatom, oder einwertige, gegebenenfalls substituierte Kohlenwasserstoffreste mit 1 bis 24 Kohlenstoffatomen bedeutet,
**$R^3$** gleich oder verschieden sein kann und Wasserstoff, $-OR^4$ oder einwertige, gegebenenfalls substituierte Kohlenwasserstoffreste mit 1 bis 24 Kohlenstoffatomen bedeutet,
**$R^4$** gleich oder verschieden sein kann und Wasserstoffatom, oder ein einwertiger, gegebenenfalls substituierter Kohlenwasserstoffrest mit 1 bis 20 Kohlenstoffatomen ist,
**X** gleich oder verschieden sein kann und Halogen oder Wasserstoff ist,
**L** gleich oder verschieden sein kann und CO, Acetylacetonat, 0,5 Cyclooctadien, 0,5 Norbornadien oder $P(R^3)_3$ ist und
**s** 3 ist.

Bevorzugt sind Rhodium-Verbindungen, wie $[Rh(O_2CCH_3)_2]_2$, $Rh(O_2CCH_3)_3$, $Rh_2(C_8H_{15}O_2)_4$, $Rh(C_5H_7O_2)_3$, $Rh(C_5H_7O_2)(CO)_2$, $Rh(CO)[Ph_3P](C_5H_7O_2)$, $Rh(CO)_2(C_5H_7O_2)$, Rh $RhCl_3[(R)_2S]_3$, $(R^2{}_3P)_2Rh(CO)X$, $(R^2{}_3P)_3Rh(CO)H$ und $Rh_2X_2Y_4$,
wobei X gleich Wasserstoff, Chlor, Brom oder Jod, Y gleich Ethyl, CO, oder 0,5 $C_8H_{12}$, wobei R gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet, bevorzugt ist R gleich Alkylreste, Cycloalkylreste oder Arylreste.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylrest, Xylylreste und Ethylphenylreste, und Aralkylreste, wie der Benzylrest, der $\alpha$- und der $\beta$-Phenylethylrest.

Beispiele für substituierte Reste **R** sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest und $R^2$ gleich Alkylreste, wie Methyl-, Ethyl- und Butylrest oder Arylreste, wie Phenyl- und Tolylrest oder mit Sauerstoff substituierte Reste, wie Methoxy-, Ethoxy-, und Phenoxyreste bedeuten sowie vorzugsweise (Acetylacetonato)carbonyl-(triphenylphosphan)Rhodium(I), (Acetylacetonato)dicarbonylrhodium(I), Carbonylchlorobis(triphenylphosphan)rhodium(I), (Acetylacetonato)(1,5-cyclooctadiene)rhodium(I), Rhodium(II)acetat-Dimer, Rhodium(III)acetylacetonat und Rhodium(II)octanoate-Dimer, besonders bevorzugt Tetracarbonyldi-$\mu$-chlorodirhodium und bei der Iridiumverbindung handelt es sich vorzugsweise um $Ir(OOCCH_3)_3$, $Ir(C_5H_7O_2)_3$, $[Ir(Z)(En)_2]_2$ und $[Ir(Z)(Dien)]_2$, wobei Z gleich Chlor, Brom, Iod oder Alkoxy, En gleich Olefin und Dien gleich Cyclooctadien ist. Bevorzugte Iridiumverbindungen sind Chlorobis (cyclooctane)iridium(I) dimer, Chlorobis(1,5-cyclooctadiene) iridium (I) dimer und Iridium (III) acetylacetonat.

Die Rhodium- und Iridiumverbindungen werden vorzugsweise in Mengen von 0,1 bis 10 Gewichtsteile, bevorzugt 0,1 - 9 Gewichtsteile, besonders bevorzugt 0,1 bis 5 Gewichtsteile, ganz besonders bevorzugt 0,1 bis 0,8 Gewichtsteile, bezogen auf das Gesamtgewicht der Zusammensetzung eingesetzt.

Vorzugsweise können die Organosiliciumverbindungen mit über Kohlenstoff an Silicium gebundenem, basischem Stickstoff in der erfindungsgemäßen Zusammensetzung enthalten sein, die aus der Gruppe der Silane der Formel ausgewählt werden:

$$Y_a R^5_b Si (OR^6)_{4-a-b}$$

worin $R^5$ gleiche oder verschiedene einwertige Kohlenwasserstoffreste mit 1 bis 8 Kohlenstoffatom(en) je Rest, $R^6$ gleiche oder verschiedene Alkylgruppen mit 1 bis 4 Kohlenstoffatom(en) je Rest oder ein Rest der Formel

- $SiR_3$, Y gleiche oder verschiedene, einwertige SiC-gebundene organische Reste mit basischem Stickstoff bedeuten, a 1 oder 2 und b 0, 1 oder 2 ist, und Disiloxane der Formel

$$(Y_c R^5_d Si)_2O,$$

worin $R^5$ und Y die oben dafür angegebene Bedeutung haben, c 0, 1, 2 oder 3, insbesondere 1 ist, mit der Maßgabe, dass die Disiloxane mindestens einen Rest Y aufweisen, und d 0,1, 2 oder 3, insbesondere 2 ist.
Die Organosiliciumverbindungen mit über Kohlenstoff an Silicium gebundenem, basischem Stickstoff können aber auch Organo(poly)siloxane mit maximal 10 Si-Atomen aus Einheiten der Formel

$$Y_x R^5_y Si (OR^6)_z O_{\frac{4-x-y-z}{2}}$$

worin $R^5$ und $R^6$ die oben dafür angegebene Bedeutung haben x 0,1 oder 2, y 0, 1, 2 oder 3 und z 0, 1 oder 2 ist, sein.
Beispiele für Kohlenwasserstoffreste R sind der Methyl-, Ethyl-, n-Propyl-, Isopropyl- und 2-Ethylhexylrest, sowie Butylreste; aus Kohlenstoff- und Wasserstoffatomen aufgebaute Reste mit aliphatischer Mehrfachbindung, wie der Vinyl- und Allylrest; cycloaliphatische Kohlenwasserstoffreste, wie der Cyclopentylrest und Cyclohexylrest, sowie Methylcyclohexylreste; aromatische Kohlenwasserstoffreste, wie der Phenylrest und Xenylrest; Alkarylreste, wie Tolylreste; und Aralkylreste, wie der Benzylrest. Vorzugsweise sind die Kohlenwasserstoffreste $R^5$, insbesondere, wenn sie an Siliciumatome, an die auch über Kohlenstoff basischer Stickstoff gebunden ist, gebunden sind, jedoch frei von aliphatischen Mehrfachbindungen. Schon wegen der leichteren Zugänglichkeit ist weiterhin bevorzugt, dass mindestens 50% der Anzahl der Reste $R^5$ Methylreste sind.

Die oben genannten Beispiele für Alkylreste $R^5$ mit 1 bis 4 Kohlenstoffatom(en) je Rest gelten im vollen Umfang auch für die Reste $R^6$.
Vorzugsweise sind die Reste Y solche der Formel

$$R^7NHR^8- ,$$

worin $R^7$ Wasserstoff oder gleiche oder verschiedene Alkyl- oder Cycloalkyl- oder Aminoalkylreste mit 1 bis 8 Kohlenstoffatomen je Rest und $R^8$ gleiche oder verschiedene geradkettige oder verzweigte von aliphatischen Mehrfachbindungen freie Kohlenwasserstoffreste mit einem Kohlenstoffatom oder 3 oder 4 Kohlenstoffatomen je Rest, insbesondere den Rest der Formel

$$- (CH_2)_3$$

bedeutet.
Die Beispiele für Alkyl- und Cycloalkylreste $R^5$ gelten im vollen Umfang auch für Alkyl- bzw. Cycloalkylreste $R^7$.

Beispiele für Aminoalkylreste $R^7$ sind solche der Formel

$$H_2N(CH_2)_3-$$

$$H_2N (CH_2)_2NH (CH_2)_2-$$

$$H_2N(CH_2)_2-$$

$(H_3C)_2NH\ (CH_2)_2$-

$H_2N(CH_2)_4$-

$H\ (NHCH_2CH_2)_3$-

und

$C_4H_9NH\ (CH_2)_2NH\ (CH_2)_2$-.

Bevorzugt werden als Organosiliciumverbindungen mit über Kohlenstoff an Silicium gebundenem basischen Stickstoff N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, 3-Aminopropyltriethoxysilan, N-(Cyclohexyl)-3-aminopropyltrimethoxysilan, N-(2-Aminoethyl)-3-aminopropyl-tris(trimethylsiloxy)silan und 1,2-Bis[N-(2-aminoethyl)-3-aminopropyl]-1,1,2,2-tetramethyldisiloxan eingesetzt.

Besonders bevorzugt wird N-(2-Aminoethyl)-3-aminopropyltrimethoxysilan eingesetzt.

Des weiteren können in der erfindungsgemäßen Zusammensetzung Metalloxide aus der Gruppe Magnesiumoxid, Aluminiumoxid, Zinnoxid, Calciumoxid, Titanoxid, Bariumoxid, Zirkoniumoxid, Zinkoxid, Ceroxid und Metallverbindungen dieser Gruppen, bei denen bei Erhitzung Oxide entstehen, wie zum Beispiel Hydroxide, enthalten sein, des weiteren zählt auch Borsäure, Zinkborat dazu, wobei alle Verbindungen dieser Gruppe in Mengen von 1,5% bis 40 Gew.% immer bezogen auf das gesamte Gewicht der Zusammensetzung, vorzugsweise 10 bis 20 Gew.% eingesetzt werden. Es können auch ihre Mischungen verwendet werden. Von diesen Verbindungen sind bevorzugt Hydroxide von Al, Sn, Ca, Ti, Ba, Zr, Zn, Ce, besonders bevorzugt Aluminiumhydroxid, Borsäure und Zinkborat.

Die erfindungsgemäßen Zusammensetzungen können Platinkomplexe enthalten, die zumindest eine ungesättigte Gruppe aufweisen, wie vorzugsweise Platin-Olefin-Komplexe, Platin-Aldehyd-Komplexe, Platin-Keton-Komplexe, Platin-Vinylsiloxan-Komplexe, Platin-1,3-Divinyl-1,1,3,3-tetramethyldisiloxankomplexe mit oder ohne Gehalt an nachweisbarem organischem Halogen, Platin-Norbornadien-methylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, Umsetzungsprodukte aus in 1-Octen gelöstem Platintetrachlorid mit sec.-Butylamin, wobei der Platin-1,3-Divinyl-1,1,3,3-tetramethyldisiloxankomplex besonders bevorzugt ist. Dieser Platinkomplex wird in Mengen von 5 bis 200 ppm, bevorzugt 10 bis 100 ppm zugesetzt, wobei die Menge auf reines Platin bezogen ist. Es können auch Mischungen der Platinkomplexe verwendet werden.

Zur Herstellung der erfindungsgemäßen Zusammensetzung werden alle oben genannten Komponenten vermischt.

Weitere Gegenstände der vorliegenden Erfindung sind Kabel und Profile, die die erfindungsgemäße Zusammensetzung enthalten. Bei den Kabeln handelt es sich vorzugsweise um Kommunikations- bzw. Energiekabel. Bei den Profilen handelt es sich um Silikonschäume oder Massiv-Dichtungen zur Brandabschottung von Räumen, Schränken und Tresoren sowie Ablationsmassen zur Auskleidung von Raketenmotoren etc.

Überraschenderweise ermöglicht die vorliegende Erfindung eine Schwerbrennbarkeit und wenn der Platinkomplex enthalten ist, setzt bereits bei einer Temperatur von 650°C ein Sintervorgang ein, der zur Bildung einer Keramikschicht aus den Verbrennungsprodukten von Silikonkautschuk führt. Dadurch können Silikonkautschukmischungen für Anwendungen, in denen Funktionserhalt im Brandfall gefordert wird, mit einer geringen Dichte (max. 1,27) und daher im Vergleich zu normalem Silikonkautschuk unverändertem Eigenschaftsniveau hinsichtlich mechanischen, elektrischen und Hitzealterungs-Eigenschaften hergestellt werden. Gegenüber den üblichen Silikonkautschukmassen wird durch die geringe Dichte der erfindungsgemäßen Zusammensetzungen ein besseres mechanisches Eigenschaftsniveau, bessere Hitzealterungs-Eigenschaften und eine höhere Isolationsfähigkeit vor allem im Temperaturbereich über 900°C erreicht. Die im Brandfall gebildete Keramik ist außerdem wesentlich schlag- und erschütterungsunempfindlicher als die im Stand der Technik beschriebenen Mischungen, die nur eine stabile Ascheschicht bilden.

**Beispiel 1: (Pt ohne Rhodium)**

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8 \cdot 10^6$ mPa·s bei 25°C werden in einem bei 150°C betriebenen Kneter zunächst mit 50 Teilen pyrogen in der Gaspase erzeugtem Siliciumdioxyd mit einer Oberfläche von 200 $m^2/g$, dann mit 1 Teil durch Trimethylsiloxygruppen endblockierten Dimethylpolysiloxan mit einer Viskosität von 96 mPa·s bei 25°C, dann mit 7 Teilen eines in den endständigen Einheiten je eine Si-gebundene

Hydroxylgruppe aufweisenden Dimethylpolysiloxans mit einer Viskosität von 40 mPa·s bei 25°C in einem Kneter mit 36 Teilen Aluminiumoxid mit einer Korngröße > 10 µm mit einem Gehalt an Alkalioxiden < 0,5 Gew. % sowie 0,3 Gew.% eines Platin- 1,3-Divinyl-1,1,3,3-tetramethyldisiloxankomplexes in einem Kneter vermischt.

**Beispiel 1a: (Rhodium ohne Pt)**

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von 8 $10^6$ mPa·s bei 25°C werden in einem bei 150°C betriebenen Kneter zunächst mit 50 Teilen pyrogen in der Gasphase erzeugtem Siliciumdioxyd mit einer Oberfläche von 200 $m^2$/g, dann mit 1 Teil durch Trimethylsiloxygruppen endblockierten Dimethylpolysiloxan mit einer Viskosität von 96 mPa·s bei 25°C, dann mit 7 Teilen eines in den endständigen Einheiten je eine Si-gebundene Hydroxylgruppe aufweisenden Dimethylpolysiloxans mit einer Viskosität von 40 mPa·s bei 25°C in einem Kneter mit 36 Teilen Aluminiumoxid mit einer Korngröße > 10 µm mit einem Gehalt an Alkalioxiden < 0,5 Gew. % sowie 2 Gew.% eines Konzentrates aus 0,6 Teilen eines in Silicon löslichen Rhodiumkomplexes mit 60 % Rhodiumgehalt, gelöst in 120 Teilen Polydimethylsiloxanmatrix, in einem Kneter vermischt.

**Vergleichsbeispiel 2**

Die in Beispiel 1 beschriebene Arbeitsweise wird wiederholt mit der Abänderung, dass kein Platinkomplex und kein Rhodiumkomplex zugesetzt wird.

**Vergleichsbeispiel 3**

Die in Beispiel 2 beschriebene Arbeitsweise wird wiederholt mit der Abänderung, dass auch kein Aluminiumoxid zugesetzt wird:

**Vergleichsbeispiel 3a**

Die in Beispiel 2 beschriebene Arbeitsweise wird wiederholt mit der Abänderung, dass auch kein Aluminiumoxid zugesetzt wird. Allerdings wird der Rhodiumkomplex zugesetzt.

**Vergleichsbeispiel 4**

Die in Beispiel 1 beschriebene Arbeitsweise wird wiederholt mit der Abänderung, dass statt Aluminiumoxid Titanoxid zugesetzt wird.

**Vergleichsbeispiel 5:**

Die in Beispiel 2 beschriebene Arbeitsweise wird wiederholt mit der Abänderung, dass auch kein Aluminiumoxid zugesetzt wird. Allerdings wird der Rhodiumkomplex zugesetzt.

**Vergleichsbeispiel 5a:**

Die in Beispiel 2 beschriebene Arbeitsweise wird wiederholt mit der Abänderung, dass auch kein Aluminiumoxid zugesetzt wird. Allerdings wird der Rhodiumkomplex und der Pt-Komplex zugesetzt.

**Vergleichsbeispiel 5b:**

Die in Beispiel 2 beschriebene Arbeitsweise wird wiederholt mit der Abänderung, dass auch kein Aluminiumoxid zugesetzt wird. Allerdings wird der Rhodiumkomplex, der Pt-Komplex und 0,09 Teile N-(2-Aminoethyl)-3-aminopropyltrimethoxysilan zugesetzt.

**Vergleichsbeispiel 6:**

Die in Beispiel 2 beschriebene Arbeitsweise wird wiederholt mit der Abänderung, dass auch kein Aluminiumoxid zugesetzt wird. Allerdings wird der Rhodiumkomplex und 0,09 Teile N-(2-Aminoethyl)-3-aminopropyltrimethoxysilan zugesetzt.
Mit der Masse gemäß Beispiel 1 und den Vergleichsbeispielen 2 - 6 wird ein elektrischer Leiter (Draht 1,5 $mm^2$) durch

Extrusion isoliert. Die Wandstärke beträgt 1 mm. Ein Meter lange Stücke der dabei erhaltenen 4 Versuchsmuster werden jeweils als verseilte Doppelleitung mit einer Schlaglänge von ca. 5 cm in einem 80 cm langen, rohrförmigen, elektrisch beheizten Ofen bis 930 °C aufgeheizt. An einem Ende der verdrillten Zwillingsleitung wird während des gesamten Versuches eine Spannung von 500 Volt AC angelegt. Das andere Ende ist offen. Die Versuchsdauer beträgt 2 Std. Darüberhinaus werden auch noch Prüfplatten aus den Vergleichsbeispielen hergestellt.

**Muster nach Beispiel 1:**

Nach Entzündung der Leitungsisolation bei ca. 420 °C verbrennt diese und bildet dabei eine feste Keramikschicht. Während der 2 Stunden bei 930 °C wird die Spannungsbelastung von 500 Volt gehalten, ohne dass es zu einem Kurzschluss kommt. Obwohl durch die thermische Ausdehnung des metallischen Leiters in der Keramikschicht vereinzelt kleine Risse entstehen. Ferner hat eine 2 mm dicke Prüfplatte aus diesem Material einen Sauerstoffindex (LOI) von 27 %.

**Muster nach Beispiel 1a:**

Nach Entzündung der Leitungsisolation bei ca. 420 °C verbrennt diese und bildet dabei eine Asche, die mechanisch nicht stabil ist. Während der 2 Stunden bei 930 °C wird die Spannungsbelastung von 500 Volt gehalten. Schon beim Erwärmen kommt es zu einem Kurzschluss, weil sich keine Keramik bildet. Allerdings wird ein deutlich langsamerer Brandverlauf beobachtet. Ferner hat eine 2 mm dicke Prüfplatte aus diesem Material einen Sauerstoffindex (LOI) von 33 %, was auf die beobachtete erhöhte Schwerbrennbarkeit hinweist. Die Platte und die Mischung sind geruchlos.

**Muster nach Vergleichsbeispiel 2:**

Nach Entzündung der Leitung bei 420 °C verbrennt diese und bildet dabei eine zusammenhaftende Ascheschicht, die aber in der Folge noch vor Erreichen von 930 °C abfällt, wodurch in Folge der thermischen Dilatation der Drähte es zu einer Berührung und dadurch zu einem Kurzschluss kommt. Die Prüfplatte hat einen LOI von 23 %.

**Muster nach Vergleichsbeispiel 3:**

Nach Entzündung der Leitung bei 420 °C verbrennt diese und bildet dabei eine pulverförmige Ascheschicht, die noch während des Brandes abfällt, kurz danach kommt es zu einem Kurzschluss. Die Prüfplatte hat einen LOI von 23 %.

**Muster nach Vergleichsbeispiel 3a:**

Nach Entzündung der Leitung bei 420 °C verbrennt diese und bildet dabei eine pulverförmige Ascheschicht, die noch während des Brandes abfällt, kurz danach kommt es zu einem Kurzschluss. Die Prüfplatte hat einen LOI von 33 %.

**Muster nach Vergleichsbeispiel 4:**

Nach Entzündung der Leitung bei 420 °C verbrennt diese und bildet dabei eine pulverförmige festhaftende Ascheschicht, die noch während des Brandes abfällt, kurz danach kommt es zu einem Kurzschluss. Die Prüfplatte hat einen LOI von 27 %.

**Muster nach Vergleichsbeispiel 5:**

Nach Entzündung der Leitung bei 420 °C verbrennt diese und bildet dabei eine keramikartige Ascheschicht, die fester ist als in den Resultaten nach Beispiel 1, es kommt zu keinem Kurzschluss.
Die Prüfplatte hat einen LOI von 29 %. Die Prüfplatte weist allerdings einen aminartigen Geruch auf.

**Muster nach Vergleichsbeispiel 5a:**

Nach Entzündung der Leitung bei 420 °C verbrennt diese und bildet dabei eine keramikartige Ascheschicht, die fester ist als in den Resultaten nach Beispiel 1, es kommt zu keinem Kurzschluss.
Die Prüfplatte hat einen LOI von 35 %. Die Prüfplatte weist allerdings einen aminartigen Geruch auf.

**Muster nach Vergleichsbeispiel 6:**

Nach Entzündung der Leitung bei 420 °C verbrennt diese und bildet dabei eine pulverförmige festhaftende Ascheschicht, die noch während des Brandes abfällt, kurz danach kommt es zu einem Kurzschluss. Die Prüfplatte hat einen LOI von 33 %. Die Prüfplatte weist allerdings einen aminartigen Geruch auf.

## Patentansprüche

1. Schwerbrennbare Zusammensetzung enthaltend peroxidisch vernetzenden, additionsvernetzenden oder kondensationsvernetzenden Siliconkautschuk aus Organopolysiloxan aus Einheiten der allgemeinen Formel

$$R_rSiO_{\frac{4-r}{2}} \qquad (I),$$

worin
R sind Alkylreste, wie der Methyl-, Ethyl-, n-Propyl-, isoPropyl-, n-Butyl-, iso-Butyl-, tert.-Butyl-, n-Pentyl-, isoPentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Alkenylreste mit 2 bis 8 Kohlenstoffatomen, Arylreste, wie der Phenyl-, Biphenyl-, Naphthyl- und Anthryl-und Phenanthrylrest; Alkarylreste., wie o-, m-, p-Tolylreste, Xylylreste und Ethylphenylreste; Aralkylreste, wie der Benzylrest, der α- und der β-Phenylethylrest, Wasserstoffatom, wobei R gleich oder verschieden sein kann und gegebenenfalls halogenierter Alkylrest, halogenierter Arylrest bedeutet,
r 0, 1, 2 oder 3 ist und einen durchschnittlichen Zahlenwert von 1,9 bis 2,1 hat.
und zumindest eine Rhodiumverbindung oder Iridiumverbindung oder Mischungen beider, wobei es sich bei der Rhodiumverbindung um $[Rh(O_2CCH_3)_2]_2$, $Rh(O_2CCH_3)_3$, $Rh_2(C_8H_{15}O_2)_4$, $Rh(C_5H_7O_2)_3$, $Rh(C_5H_7O_2)(CO)_2$, $Rh(CO)[Ph_3P](C_5H_7O_2)$, $Rh(CO)_2(C_5H_7O_2)$, $RhCl_3[(R)_2S]_3$, $(R^2_3P)_2Rh(CO)X$, $(R^2_3P)_3Rh(CO)H$ und $Rh_2X_2Y_4$, Rhodiumverbindung, wobei zumindest eine aus der Gruppe ausgewählt wird, die aus Verbindungen der Formel

$$[(R^2\text{-}C(=O)\text{-}O\text{-})_2Rh]_2 \qquad (III),$$

$$L\,(X)Rh(PR^3_3)_s \qquad (IV)$$

oder

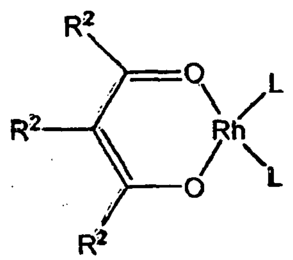

(V)

besteht,
wobei

R² gleich oder verschieden sein kann und Wasserstoffatom, oder einwertige, gegebenenfalls substituierte Kohlenwasserstoffreste mit 1 bis 24 Kohlenstoffatomen bedeutet,

$R^3$ gleich oder verschieden sein kann und Wasserstoff, $-OR^4$ oder einwertige, gegebenenfalls substituierte Kohlenwasserstoffreste mit 1 bis 24 Kohlenstoffatomen bedeutet,
$R^4$ gleich oder verschieden sein kann und Wasserstoffatom, oder ein einwertiger gegebenenfalls substituierter Kohlenwasserstoffrest mit 1 bis 20 Kohlenstoffatomen ist,
X gleich oder verschieden sein kann und Halogen oder Wasserstoff ist,
L gleich oder verschieden sein kann und CO, Acetylacetonat, 0,5 Cyclooctadien, 0,5 Norbornadien oder $P(R^3)_3$ ist und
s 3 ist,

handelt, wobei X gleich Wasserstoff, Chlor, Brom oder Jod, Y gleich Ethyl, CO, H oder 0,5- $C_8H_{12}$, R gleich oder verschieden sein kann und einen von aliphatischen Kohlenstoff-Kohlenstoff-Mehrfachbindungen freien, gegebenenfalls substituierten organischen Kohlenwasserstoffrest mit bis zu 18 C-Atomen bedeutet, sowie (Acetylacetonato) carbonyl-(triphenylphosphan) Rhodium (I), (Aeetylacetonato)dicarbonylrhodium(I), Carbmylchlorobis(triphenylphosphan)rhodium(I), (Acetylacetonato)(1,5-cyclooctadiene)rhodium(1), Rhodium(II)acetat-Dimer, Rhodium(III)acetylacetonat und Rhodium (II) octanoate-Dimer und bei der Iridiumverbindung handelt es sich um Ir $(OOCCH_3)_3$, Ir $(C_5H_7O_2)_3$, $[Ir(Z)(En)_2]_2$ und $[Ir(Z)(Dien)]_2$, wobei Z gleich Chlor, Brom, Iod oder Alkoxy, En gleich Olefin und Dien gleich Cyclooctadien ist.

2. Schwerbrennbare Zusammensetzung nach Anspruch 1, **dadurch gekennzeichnet, dass** sie eine Organosiliciumverbindung mit über Kohlenstoff an Silicium gebundenen basischen Stickstoff enthält.

3. Schwerbrennbare. Zusammensetzung nach Anspruch 1 oder 2, **dadurch gekennzeichnet, dass** zumindest eine Verbindung aus der Gruppe, die aus Metalloxiden aus der Gruppe Aluminiumoxid, Magnesiumoxid, Zinnoxid, Calciumoxid, Bariumoxid, Ceroxid, Titanoxid, Zirkoniumoxid, Zinkoxid und Metallverbindungen dieser Gruppe, bei denen bei Erhitzung Oxide entstehen, und Borsäure, Zinkborat besteht, enthalten ist.

4. Schwerbrennbare Zusammensetzung nach einem oder mehreren der Ansprüche 1 bis 3, **dadurch gekennzeichnet, dass** zumindest ein Platinkomplex mit zumindest einer ungesättigten Gruppe enthalten ist.

5. schwerbrennbare Zusammensetzung nach Anspruch 4, **dadurch gekennzeichnet, dass** der Platinkomplex mit zumindest einer ungesättigten Gruppe der Platin-1,3-Divinyl-l,1,3,3-tetramethyldisiloxankomplex ist.

6. Kabel, **dadurch gekennzeichnet, dass** die Isolation der Leiter eine Zusammensetzung nach einem oder mehreren der Ansprüche 1 bis 5 enthält.

7. Profil, **dadurch gekennzeichnet, dass** es eine Zusammensetzung nach einem oder mehreren der Ansprüche 1 bis 5 enthält.

8. Verwendung einer Zusammensetzung nach einem der Ansprüche 3 bis 5, eines Kabels mit einer Zusammensetzung nach einem der Ansprüche 3 bis 5, eines Profils mit einer Zusammensetzung nach einem der Ansprüche 3 bis 5 zum Funktionserhalt und zur Schwerbrennbarkeit im Brandfall.

9. Verwendung einer Zusammensetzung nach einem oder mehreren der Ansprüche 1 bis 3, eines Kabels mit einer Zusammensetzung nach einem oder mehreren der Ansprüche 1 bis 3, eines Profils mit einer Zusammensetzung nach einem oder mehreren der Ansprüche 1 bis 3 zur Schwerbrennbarkeit im Brandfall.

## Claims

1. Flame-retardant composition containing peroxidically crosslinking, addition-crosslinking or condensation-crosslinking silicone rubber comprising organopolysiloxane comprising units of the general formula

$$R_rSiO_{\frac{4-r}{2}} \qquad (I),$$

in which

R are alkyl radicals, such as the methyl, ethyl, n-propyl, isopropyl, n-butyl, isobutyl, tert-butyl, n-pentyl, isopentyl, neopentyl or tert-pentyl radical, hexyl radicals, such as the n-hexyl radical, heptyl radicals, such as the n-heptyl radical, octyl radicals, such as the n-octyl radical, and isooctyl radicals, such as the 2,2,4-trimethylpentyl radical, nonyl radicals, such as the n-nonyl radical, decyl radicals, such as the n-decyl radical, dodecyl radicals, such as the n-dodecyl radical, octadecyl radicals, such as the n-octadecyl radical; cycloalkyl radicals, such as cyclopentyl, cyclohexyl and cycloheptyl radicals and methylcyclohexyl radicals; alkenyl radicals having 2 to 8 carbon atoms, aryl radicals, such as the phenyl, biphenyl, naphthyl and anthryl and phenanthryl radical; alkaryl radicals, such as o-, m- and p-tolyl radicals, xylyl radicals and ethylphenyl radicals; aralkyl radicals, such as the benzyl radical and the α- and the β-phenylethyl radical, hydrogen atom, where R may be identical or different and denotes optionally halogenated alkyl radical or halogenated aryl radical,

r is 0, 1, 2 or 3 and has an average numerical value of 1.9 to 2.1,

and at least one rhodium compound or iridium compound or mixtures of the two, wherein the rhodium compound is $[Rh (O_2CCH_3)_2]_2$ , $Rh ( O_2CCH_3)_3$ , $Rh_2 (C_8H_{15}O_2)_4$ , $Rh (C_5H_7O_2 )_3$, $Rh (C_5H_7O_2) (CO)_2$, $Rh (CO) [Ph_3P] (C_5H_7O_2)$ , $Rh (CO)_2 (C_5H_7O_2)$ , $RhCl_3 [(R)_2S]_3$, $(R^2{}_3P)_2 Rh (CO) X$, $(R^2{}_3P)_3Rh (CO) H$ and $Rh_2X_2Y_4$, rhodium compound, at least one being selected from the group which consists of compounds of the formula

$$[(R^2\text{-C (=O) -O-})_2Rh]_2 \quad (III),$$

$$L(X)Rh(PR^3{}_3)_s \quad (IV)$$

or

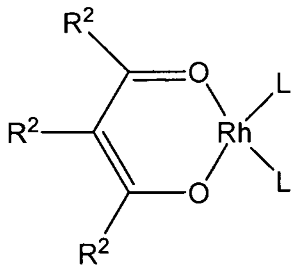

(V)

in which

**R²** may be identical or different and is a hydrogen atom or a monovalent, optionally substituted hydrocarbon radical having 1 to 24 carbon atoms,
**R³** may be identical or different and is hydrogen, $-OR^4$ or a monovalent, optionally substituted hydrocarbon radical having 1 to 24 carbon atoms,
**R⁴** may be identical or different and is a hydrogen atom or a monovalent optionally substituted hydrocarbon radical having 1 to 20 carbon atoms,
**X** may be identical or different and is halogen or hydrogen,
**L** may be identical or different and is CO, acetylacetonate, 0.5 cyclooctadiene, 0.5 norbornadiene or $P(R^3)_3$ and
**S** is 3,

where X is hydrogen, chlorine, bromine or iodine, Y is ethyl, CO or 0.5 $C_8H_{12}$, **R** may be identical or different and is an optionally substituted organic hydrocarbon radical free of aliphatic carbon-carbon multiple bonds and having up to 18 carbon atoms, and (acetyl-acetonato)carbonyl(triphenylphosphane)rhodium(I), (acetylacetonato)dicarbonylrhodium(I) carbonylchlorobis(triphenylphosphane)rhodium(I), (acetylacetonato)(1,5-cyclooctadiene)rhodium(I), rhodium(II) acetate dimer, rhodium (III) acetylacetonate and rhodium(II) octanoate dimer, and the iridium compound is $Ir (OOCCH_3)_3$, $Ir(C_5H_7O_2)_3$, $[Ir (Z) (Ene)_2]_2$ and $[Ir(Z)(Diene)]_2$, in which Z is chlorine, bromine, iodine or alkoxy, Ene is olefin and Diene is cyclooctadiene.

2. Flame-retardant composition according to Claim 1, **characterized in that** it contains an organosilicon compound having basic nitrogen bonded via carbon to silicon.

3. Flame-retardant composition according to Claim 1 or 2, **characterized in that** at least one compound from the group which consists of metal oxides from the group consisting of aluminium oxide, magnesium oxide, tin oxide, calcium oxide, barium oxide, cerium oxide, titanium oxide, zirconium oxide, zinc oxide and metal compounds of this group which form oxides on heating, and boric acid and zinc borate, is present.

4. Flame-retardant composition according to one or more of Claims 1 to 3, **characterized in that** at least one platinum complex having at least one unsaturated group is present.

5. Flame-retardant composition according to Claim 4, **characterized in that** the platinum complex having at least one unsaturated group is the platinum-1,3-divinyl-1,1,3,3-tetramethyldisiloxane complex.

6. Cable, **characterized in that** the insulation of the conductors contains a composition according to one or more of Claims 1 to 5.

7. Profile, **characterized in that** it contains a composition according to one or more of Claims 1 to 5.

8. Use of a composition according to any of Claims 3 to 5, of a cable having a composition according to any of Claims 3 to 5 or of a profile having a composition according to any of Claims 3 to 5 for maintaining function and for flame-retardance in the event of a fire.

9. Use of a composition according to one or more of Claims 1 to 3, of a cable having a composition according to one or more of Claims 1 to 3 or of a profile having a composition according to one or more of Claims 1 to 3 for flame-retardance in the event of a fire.

## Revendications

1. Composition difficilement inflammable contenant du caoutchouc de silicone à réticulation de peroxyde, à réticulation d'addition ou à réticulation de condensation à partir d'organopolysiloxane tiré d'unités de la formule générale :

$$R_rSiO_{\frac{4-r}{2}} \qquad (I),$$

dans laquelle R représente des radicaux alkyle, comme le radical méthyle, éthyle, n-propyle, iso-propyle, n-butyle, iso-butyle, tert.-butyle, n-pentyle, iso-pentyle, néo-pentyle, tert.-pentyle, des radicaux hexyle comme le radical n-hexyle, des radicaux heptyle, comme le radical n-heptyle, des radicaux octyle, comme le radical n-octyle et des radicaux iso-octyle, comme le radical 2,2,4-triméthylpentyle, des radicaux nonyle, comme le radical n-nonyle, des radicaux décyle, comme le radical n-décyle, des radicaux dodécyle, comme le radical n-dodécyle, des radicaux octadécyle, comme le radical n-octadécyle ; des radicaux cycloalkyle, comme les radicaux cyclopentyle, cyclohexyle, des radicaux cycloheptyle et des radicaux méthylcyclohexyle ; des radicaux alcényle avec 2 à 8 atomes de carbone, des radicaux aryle, comme le radical phényle, biphényle, naphtyle, anthryle et phénanthryle ; des radicaux alkaryle, comme les radicaux o-tolyle, m-tolyle, p-tolyle, les radicaux xylyle et les radicaux éthylphényle ; des radicaux aralkyle, comme le radical benzyle, le radical $\alpha$-phényléthyle et le radical $\beta$-phényléthyle, un atome d'hydrogène, où R peut être identique ou différent et représente, le cas échéant, un radical alkyle halogéné, un radical aryle halogéné,
r représente 0, 1, 2 ou 3 et possède une valeur numérique moyenne de 1,9 à 2,1
et au moins un composé de rhodium ou un composé d'iridium ou des mélanges de ceux-ci, le composé de rhodium est un composé de rhodium $[Rh\ (O_2CCH_3)_2]_2$, $Rh\ (O_2CCH_3)_3$ , $Rh_2\ (C_8H_{15}O_2)_4$, $Rh\ (C_5H_7O_2)_3$, $Rh\ (C_5H_7O_2)(CO)_2$, $Rh\ (CO)\ [Ph_3P]\ (C_5H_7O_2)$, $Rh\ (CO)_2\ (C_5H_7O_2)$, $RhCl_3\ [(R)_2S]_3$, $(R^2{}_3P)_2Rh\ (CO)\ X$, $(R^2{}_3P)_3Rh\ (CO)\ H$ et $Rh_2X_2Y_4$,
au moins un étant choisi dans le groupe qui comprend des composés de la formule:

$$[(R^2 - C\ (=O) - O -)2\ Rh]_2 \qquad (III)$$

$$L\ (X)\ Rh\ (PR^3{}_3)_s \qquad (IV)$$

ou

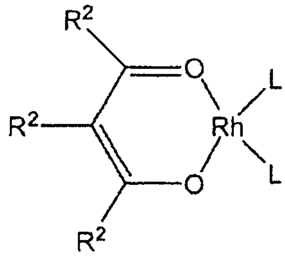

(V)

dans laquelle

$R^2$ peut être identique ou différent et représente un atome d'hydrogène ou des radicaux d'hydrocarbure monovalents, éventuellement substitués avec 1 à 24 atomes de carbone,
$R^3$ peut être identique ou différent et représente de l'hydrogène, $-OR^4$ ou des radicaux d'hydrocarbure monovalents, éventuellement substitués avec 1 à 24 atomes de carbone,
$R^4$ peut être identique ou différent et représente un atome d'hydrogène ou un radical d'hydrocarbure monovalent, éventuellement substitué avec 1 à 20 atomes de carbone,
X peut être identique ou différent et représente un halogène ou de l'hydrogène,
L peut être identique ou différent et représente un CO, un acétylacétonate, un 0,5-cyclooctadiène, un 0,5-norbornadiène ou $P(R^3)_3$ et
s représente 3,
X représentant de l'hydrogène, du chlore, du brome ou de l'iode, Y représentant un éthyle, CO, ou 0,5 $C_8H_{12}$, R pouvant être identique ou différent et représentant un radical d'hydrocarbure organique, éventuellement substitué, exempt de liaisons multiples carbone-carbone aliphatiques avec 18 atomes de carbone maximum, de même qu'un rhodium (acétylacétonato)carbonyle-(triphénylphosphoreux), un rhodium (acétylacétonato) dicarbonyleux, un rhodium carbonylchlorobis (triphénylphosphoreux), un rhodium (acétylacétonato) (1,5-cyclooctadièneux), un dimer-acétate rhodique, un dimer-acétylacétonate rhodique et un dimer-octanoate rhodique tandis que le composé d'iridium est Ir $(OOCCH_3)_3$, Ir $(C_5H_7O_2)_3$, $[Ir (Z) (En)_2]_2$ et $[Ir (Z) (Diène)]_2$, Z représentant du chlore, du brome, de l'iode ou un alcoxy, En représentant de l'oléfine et diène représentant un cyclooctadiène.

**2.** Composition difficilement inflammable suivant la revendication 1, **caractérisée en ce qu'**elle contient un composé d'organosilicium avec de l'azote basique lié à du silicium par du carbone.

**3.** Composition difficilement inflammable suivant la revendication 1 ou 2, **caractérisée en ce qu'**elle contient au moins un composé du groupe constitué d'oxydes métalliques du groupe des oxyde d'aluminium, oxyde de magnésium, oxyde d'étain, oxyde de calcium, oxyde de baryum, oxyde cérique, oxyde de titane, oxyde de zirconium, oxyde de zinc et des composés métalliques de ce groupe pour lesquels des oxydes sont générés en cas d'échauffement et d'acide borique et de borate de zinc.

**4.** Composition difficilement inflammable suivant l'une ou plusieurs des revendications 1 à 3, **caractérisée en ce qu'**elle contient au moins un complexe de platine avec au moins un groupe insaturé.

**5.** Composition difficilement inflammable suivant la revendication 4, **caractérisée en ce que** le complexe de platine avec au moins un groupe insaturé est le complexe de platine-1,3-divinyl-1,1,3,3-tétraméthyldisiloxane.

**6.** Câble, **caractérisé en ce que** l'isolation des conducteurs comprend une composition suivant l'une ou plusieurs des revendications 1 à 5.

**7.** Profilé, **caractérisé en ce qu'**il comprend une composition suivant l'une ou plusieurs des revendications 1 à 5.

8. Utilisation d'une composition suivant l'une des revendications 3 à 5, d'un câble avec une composition suivant l'une des revendications 3 à 5, d'un profilé avec une composition suivant l'une des revendications 3 à 5 pour le maintien de la fonction et pour rendre la combustibilité difficile en cas d'incendie.

9. Utilisation d'une composition suivant l'une ou plusieurs des revendications 1 à 3, d'un câble avec une composition suivant l'une ou plusieurs des revendications 1 à 3, d'un profilé avec une composition suivant l'une ou plusieurs des revendications 1 à 3 pour rendre la combustibilité difficile en cas d'incendie.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3831478
- DE 3839900 A
- US 5057151 A
- EP 0359251 A
- EP 0355459 B1